Europäisches Patentamt

**European Patent Office**

**Office européen des brevets**

(11) Publication number: **0 347 389**
**A2**

# EUROPEAN PATENT APPLICATION

(21) Application number: **89830260.9**

(22) Date of filing: **13.06.89**

(51) Int. Cl.⁴: **F 16 C 1/02**
**F 16 C 1/26**

(30) Priority: **14.06.88 IT 6756288**

(43) Date of publication of application:
**20.12.89 Bulletin 89/51**

(84) Designated Contracting States:
**AT BE CH DE ES FR GB GR IT LI LU NL SE**

(71) Applicant: **TECAFLEX INTERNATIONAL S.p.A.**
**Via Torino, 75**
**I-10060 Airasca (Torino) (IT)**

(72) Inventor: **Zannotti, Giancarlo**
**Via Monte Rosa 8**
**I-10098 Rivoli (Torino) (IT)**

(74) Representative: **Quinterno, Giuseppe et al**
**c/o Jacobacci-Casetta & Perani S.p.A. Via Alfieri, 17**
**I-10121 Torino (IT)**

(54) A flexible-shaft transmission particularly for tachometric instruments for motor vehicles or like applications.

(57) A flexible-shaft transmission, particularly for motor-vehicle tachometric instruments or like applications, including a metal cable (2) which is rotatable in a sheath (3) and connectible at respective ends to a rotary drive member and to a rotary driven member inserted in respective end connectors (4, 5) of the sheath. The sheath (3) is constituted by an inner tubular layer (7) of self-lubricating thermoplastics material and by an outer tubular layer (8) of thermoplastics rubber which is extruded on to the inner tubular layer (7) and glued thereto.

FIG. 2

EP 0 347 389 A2

## Description

## A flexible-shaft transmission particularly for tachometric instruments for motor vehicles or like applications

The present invention relates to flexible-shaft transmissions in general for transmitting drive from a rotary drive member to a rotary driven member, for example for motor-vehicle tachometric instruments or like applications.

More particularly, the invention relates to a flexible-shaft transmission of the type comprising a sheath with end connectors for engagement of the rotary drive member and the rotary driven member respectively, and a metal cable which is rotatable in the sheath and connectible at its ends to the drive and driven members.

According to the prior art, the sheath is normally constituted by a wire wound helically in tight coils and within which the metal cable is rotatable.

This solution is fairly expensive to manufacture, involves difficulties in the connection of the sheath to the two end connectors, and also has disadvantages in use due to the noise and vibrations resulting from mechanical friction between the sheath and the cable, which also limits the operative life of the transmission.

The object of the present invention is to avoid the above problems and to provide a flexible-shaft transmission of the type defined at the beginning which is easy to manufacture, strong and cheap, and is formed so as to reduce operating noise and vibrations, and adapted to ensure a longer operative life.

According to the invention, this object is achieved by virtue of the fact that the sheath of the transmission is constituted by an inner tubular layer of self lubricating thermoplastics material, and an outer tubular layer of thermoplastic rubber extruded on to the inner tubular layer and glued thereto.

The end connectors of the sheath are conveniently also of thermoplastics material and are moulded on to end regions of the inner thermoplastics layer of the sheath from which the outer thermoplastics rubber layer has been removed.

Each connector conveniently includes a first tubular portion for anchorage to the sheath and a second tubular portion for axial engagement of the drive member or the driven member respectively, the second tubular portion carrying an axial retaining member in the form of a substantially U-shaped spring clip whose side arms are adapted to snap-engage in a corresponding annular groove in the drive or driven member respectively; the side arms of the clip facing a wedge-shaped part of the second tubular portion of the connector which is adapted to force apart the arms of the clip and consequently release it from the annular groove as a result of an external radial force exerted on the spring.

A further subject of the invention is a method for the continuous production of the sheath defined above for the flexible-shaft-transmission.

Further characteristics and advantages of the invention will become clear from the detailed description which follows with reference to the appended drawings, provided purely by way of non-limiting example, in which:

Figure 1 is a schematic side elevation of a flexible-shaft transmission according to the invention,

Figure 2 is a longitudinal-section taken on the line II-II of Figure 1,

Figure 3 is a cross-section taken on the line III-III of Figure 2, and

Figure 4 is a diagrammatic side elevation showing schematically the production line for the sheath of the flexible-shaft transmission according to the invention.

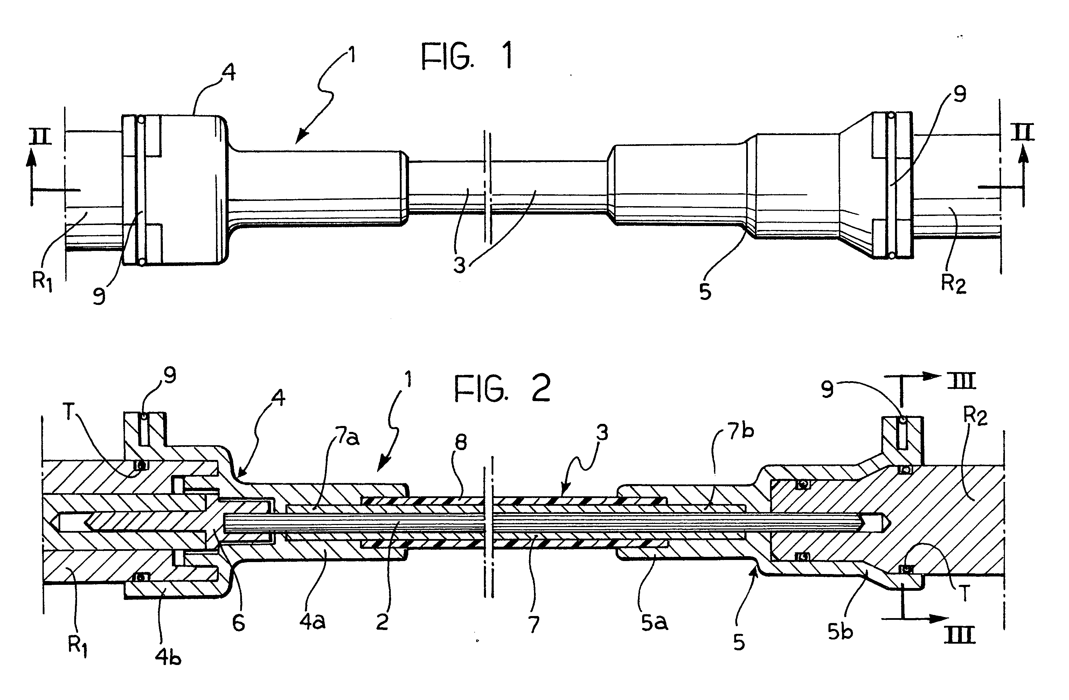

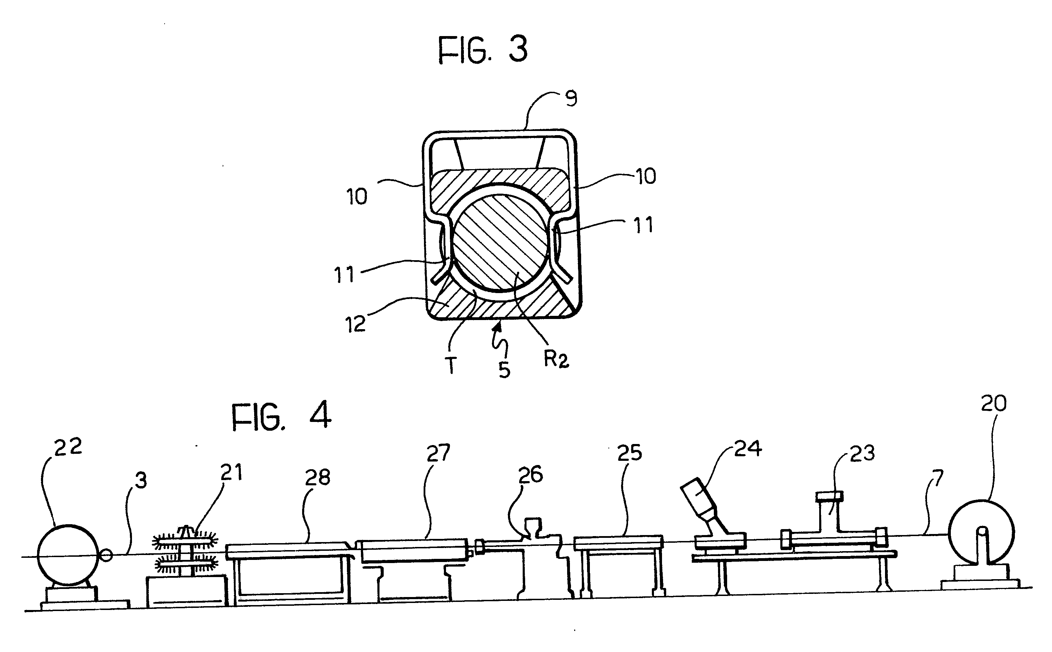

With reference initially to Figures 1 and 3, a flexible-shaft transmission according to the invention is generally indicated 1 and is fitted to a tachometric indicator for motor vehicles. The transmission 1 is constituted by a steel wire or cable 2 inserted in a sheath 3 with end connectors 4, 5 engaged by a rotary drive member $R_1$ associated with the vehicle gearbox and a driven rotary member $R_2$ associated with the tachometric instrument respectively. The ends of the cable 2 are fixed torsionally, one to the rotary drive member $R_1$ by means of an intermediate connecting member element 6 and the other directly to the driven rotary member $R_2$.

According to the invention, the sheath 3 is constituted by an inner tubular layer 7 of self-lubricating thermoplastics material, normally polyamide filled with graphite, and by an outer tubular layer 8 of thermoplastic rubber. The outer layer 8 is applied to the outer layer 7 by extrusion and glued thereto in the manner which will be explained below.

The two end connectors 4, 5 are of the same material as that forming the inner tubular layer 7 of the sheath 3, and are moulded on to end regions 7a, 7b of the inner layer 7 from which the outer thermoplastic rubber layer 8 has been removed.

Each connector 4, 5 includes a first tubular portion 4a, 5a for anchorage to the sheath 3 and a second tubular portion 4b, 5b in which the respective rotary drive member $R_1$ or driven member $R_2$ is axially engaged.

Each of the rotary members $R_1$, $R_2$ is retained axially relative to the portion 4b, 5b of the respective connector 4, 5 by means of a substantially U-shaped spring clip 9 shown in greater detail in Figure 3. The shaped free ends 11 of the side arms 10 of the clip 9 are engaged in a corresponding groove T in the driven member $R_2$ (or in the drive member $R_1$). This member $R_2$ (or $R_1$) is snap engaged when it is inserted axially into the connector 5 (or 4), whilst if the member $R_2$ (or $R_1$) is to be removed it suffices for the clip 9 to be pressed radially towards the axis of the transmission 1 against a wedge-shaped part 12 of the connector 5 (or 4). As a result of this pressure, the ends 11 of the side arms 10 of the clip 9 are forced apart by the wedge-shaped part 12 and are released from the groove T, thus enabling the rotary member $R_2$ (or $R_1$) to be separated from the connector 5 (or 4).

The method of manufacture of the sheath 3 will now be described below with reference to Figure 4 which shows schematically its production line.

The inner tubular element 7 is first formed by conventional techniques and is wound on to an unwinding roller 20 situated at the beginning of the line. The inner tubular element 7 is drawn continuously along the line by means of an entrainment device 21 situated, together with a winding roller 22, at the end of the line.

Immediately downstream of the unwinding roller 20, the inner tubular element 7 passes through an adhesive dispenser 23 in which a heat-polymerisable glue suitable for joining thermoplastic rubber and polyamide is applied to the outer surface of the tubular element 7 in a controlled manner.

Downstream of the dispenser 23, the tubular element 7 passes through a hot-air conveyor unit 24 (at a temperature of about 100°C) which has the function of evaporating the solvent in the glue.

The tubular element 7 then passes through a heater 25 including quartz lamps arranged in a triangle so as to concentrate heat on to the adhesive in order to initiate its polymerisation.

The tubular element 7 then passes through an extruder 26 with an inclined head supplied with thermoplastic rubber which is extruded on to the tubular element 7 so as to form the outer tubular element 8 and thus complete the sheath 3. The parameters set for the regulation of the extruder 26 are such as to ensure good adhesion between the materials of the inner tubular element 7 and the outer tubular element 8. By way of example, these parameters may be as follows:
- an extruder-screw temperature of between 160° and 170°C,
- a head temperature of between 170 and 190°C,
- extrusion rate: about 15 metres/minute
- angular velocity of the extruder screw: about 70 revolutions/minute.

At the output of the extruder head 26, the sheath 3 enters a vacuum forming chamber 27 and, immediately afterwards, a cooling chamber 28.

The sheath 3 thus formed is finally wound up through the entrainment device 21 on to the winding roller 22.

Laboratory and operational tests have confirmed that, by virtue of the conformation of the sheath 3 and the connectors 4 and 5, the transmission 1 according to the invention provides a series of important advantages over conventional flexible-shaft transmissions, which can be summarised as follows:
- a reduction in noise and vibrations by virtue of the soundproofing and damping characteristics of the sheath 3 and, particularly, of the outer tubular layer 8,
- a longer life due to reduced mechanical friction between the inner tubular layer 7 or the sheath 3 and the steel cable 2,
- very good resistance to atmospheric agents, oils and chemical reagents,
- quick and easy connection to the drive and driven members $R_1$, $R_2$, without the need for tools and with a connection which remains firm with time,
- ease of maintenance of the steel cable 2,
- dimensional stability by virtue of the moulding of the connectors 4 and 5 on to the sheath 3,
- longer operative life.

## Claims

1. A flexible-shaft transmission, particularly for motor-vehicle tachometric instruments or like applications, of the type comprising a sheath with end connectors for engagement of a rotary drive member and a rotary driven member, and a metal cable rotatable in the sheath and connectible at its ends to the drive and driven members characterised in that the sheath (3) is constituted by an inner tubular layer (7) of self-lubricating, thermoplastics material and an outer tubular layer (8) of thermoplastic rubber extruded on to the inner tubular layer (7) and glued thereto.

2. A transmission according to Claim 1, characterised in that the end connectors (4, 5) are of thermoplastics material and are moulded on to end regions of the inner thermoplastics layer (7) of the sheath (8) from which the outer thermoplastic rubber layer (8) has been removed.

3. A transmission according to Claim 1 or Claim 2, characterised in that each connector (4, 5) includes a first tubular portion (4a, 5a) for anchorage to the sheath (3) and a second tubular portion (4b, 5b) for the axial arrangement of the drive member or the driven member ($R_1$, $R_2$) respectively, the second tubular portion (4b, 5b) carrying an axial retaining member in the form of a substantially U-shaped spring clip (9) whose side arms (11) are adapted to snap-engage in a corresponding annular groove (T) in the drive or driven member ($R_1$, $R_2$) respectively; the side arms (11) of the clip (9) facing a wedge-shaped part (12) of the second tubular portion (4b, 5b) of the connector (4, 5) which is adapted to force apart the arms of the clip and consequently release it from the annular groove (T) as a result of an external radial force exerted on the clip (9).

4. A method for producing a sheath for a flexible-shaft transmission according to any one of the preceding claims, characterised in that it comprises the following successive steps carried out continuously:
- providing a continuous tube (7) of thermoplastics material with a graphite filler,
- applying a layer of heat-polymerisable adhesive to the outer surface of the tube (7),
- heating the tube (7) to start the polymerisation of the adhesive,
- supplying the tube (7) to an extruder (26) whereby the tube (7) is covered with an extruded layer of thermoplastics rubber (8) which is fixed to the tube (7) by means of the adhesive,
- forming the tube (7) covered with the outer layer (8) under vacuum and cooling it.

FIG. 1

FIG. 2

EP 0 347 389 A2

# FIG. 3

# FIG. 4

EP 0 347 389 A2